# EUROPEAN PATENT APPLICATION

(11) **EP 4 755 945 A1**
(43) Date of publication of application: **10.06.2026**
(21) Application number: 24217652.7
(22) Date of filing: 05.12.2024
(51) Int. Cl.: C08G 69/14, D04H 1/4334, D04H 1/56

(54) **PA12 MELTBLOWN NONWOVENS**

(71) Applicant: Evonik Operations GmbH, 45128 Essen (DE)
(72) Inventor: The designation of the inventor has not yet been filed
(74) Representative: Evonik Patent Association

(57) **Abstract**

Melt blown non woven material made of fibers out of long chain linear aliphatic semicrystalline polyamides having 8 to18 carbon atoms per amid group and a high melt flow index.

## Description

### Field of the invention

Melt blown non woven material made of fibers out of long chain linear aliphatic semicrystalline polyamides having 8 to18 carbon atoms per amid group and a high melt flow index.

### Background

Meltblown nonwovens belong to the group of spun laid nonwovens, which have the advantage, that a polymer melt can be directly transformed into a nonwoven structure.

The meltblown process is a manufacturing process used to produce nonwoven fabrics. In this process, a polymer resin is melted and extruded through a spinneret (a.k.a. DIE) to form fine fibers. These fibers are then blown by hot air onto a moving conveyor belt (a.k.a. collector), where they are collected to form a web of randomly oriented fibers. The web is then bonded together using heat, pressure, or chemicals to create a nonwoven fabric with unique properties such as high filtration efficiency, absorbency, and barrier properties.

The process requires polymers with high flowabilities within their melting range, to allow for small fiber diameters and, therefore, small pore sizes.

Polypropylene (PP) is widely used for meltblown processes, as it is easily processable at lower temperatures and relatively cheap. The fabric itself shows high air permeability, for small basic weights. Hence, to obtain low air permeability (e.g. high air barrier, windbreaker), one must increase the basic weight, accordingly, via process or lamination. If PP cannot meet the applications' requirements, Polyesters (e.g. PBT= Polybutylenterephthalat) are being used in meltblown processes.

Present commercial polyamide-based meltblown nonwovens are mainly based on PA 6 or PA 6.6 and are interesting materials for liquid filtration at higher temperature. Due to the high density of amide groups and the resulting hydrogen bonding between the polymer chains, PA 6 and PA 6.6 and other short chain polyamides show high melt viscosities, high melting points and high melt enthalpies.

The high viscosity causes low flowabilities and make it difficult to spin short chain PA to a meltblown nonwoven with small fiber diameters and a narrow fiber size distribution. Besides the difficulties of an homogenous meltblown nonwoven - which is essential to obtain good results in any kind application (e.g. filtration, membrane) - low flowabilities result in decreased throughput, hence, increase production time, increased energy consumption and, overall, costs. Furthermore, short chain PA based materials show high water uptakes.

These disadvantages make it difficult to justify the advantages for a broad field of applications. Rare examples of commercially PA6 grades are available (e.g. ULTRAMID^{®} B24 N by BASF), which can be processed to homogenous meltblown nonwovens on specific equipment. Typically, the temperature of the polymer melt at the die is generally about 80°C-100°C above melting temperature of the polymer used, hence, PA6 are commonly processed by temperatures of 300°C and above, to allow for a processable meltblown nonwoven.

To those skilled in the art of meltblown nonwovens, such challenges are well known.

US 11,376,534 B2 discloses meltblown nonwovens where the polyamides are based on PA 6 and PA 6.6. They might also be polyamide derivatives, copolymers, terpolymer, blends and alloys containing or prepared from PA 6.6 or PA 6 and copolymers or terpolymers with the repeat units noted above including PA 6.T/6.6, PA 6.12, PA 6/6.6, PA 6.I/6.6, PA 11, and PA 12. Thus, they all are based on high temperature melting polyamides. The relative viscosity may has been lowered by depolymerization with water or thermal degradation before or within the meltblown process.

Contrary to PA6, long chain nylons such as PA11 and PA12 have a lower amide group density, which results in a lower melting temperature and respective lower melt viscosity at given temperatures (e.g. >260°C process temperature for common PA12 nonwoven).

Such PA with high melting temperatures and high viscosities need specific equipment, due to their high process temperatures. Thus, the widely available PP meltblown nonwoven machinery is not applicable for common nylons.

The key material properties for the meltblown nonwoven processability are reflected by the melt flow rate or the melt flow index (MFI). A high melt flow index by given temperature represents higher flow rates. Higher MFI needs less pressure and can be processed easier.

Too low temperatures generate a rough surface (shark skin), too high temperatures result in a sticking of the material. Obviously, neither is favored.

Good results will be reached with materials which will be workable at temperatures up to 250°C and have at this temperature a minimum MFI of 90, where the MFI is determined according DIN EN ISO 1133 with a load of 2.16 kg at a temperature of 60°C above the melting point.

The deficiencies of the prior art will be solved by:
Meltblown nonwoven material made of fibers out of long chain linear aliphatic semicrystalline polyamide having
i. 8 to16 carbon atoms per amid group,
ii. a melt flow index of at least 90 g/10 min, determined by DIN EN ISO 1133 with a load of 2.16 kg at a temperature of 60°C above the melting point,
iii. where the **polyamide** optionally comprise additives

The MFI is preferably at least 90 g/10 min at a temperature of 40°C above the melting point, especially preferred at least 150 g/10 min at a temperature of 30°C above the melting point and particularly preferred at least 200 g/10 min at a temperature of 20°C above the melting point.

Long chain polyamides are advantageous because they have a lower melting point and have a lower water absorption than short chain polyamides.

The dimensionally stability of long chain polyamide materials is better than those of short chain polyamide materials, and the difference of the mechanical data of wet and dry polyamide materials are advantageous for long chain polyamide materials versus short chain polyamide materials.

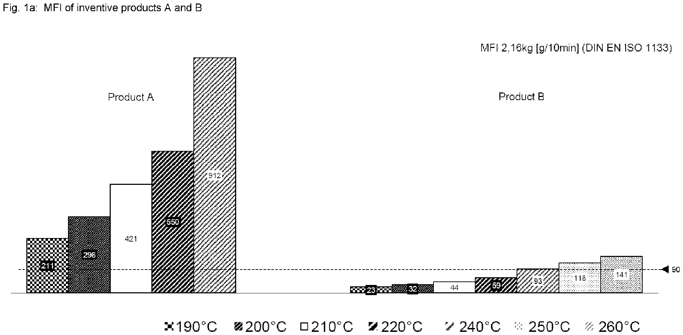

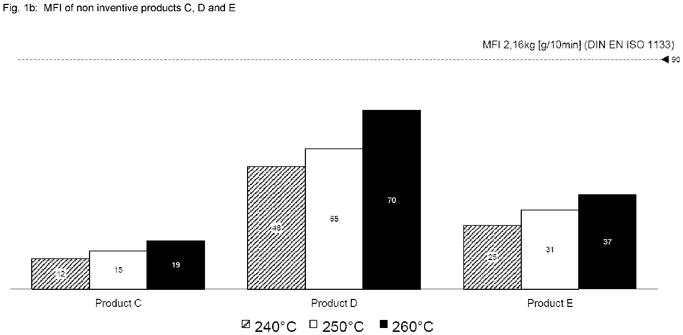

The known commercial long chain PA mentioned were not observed to it's full potential, as the melt viscosities of common PA12 grades are by far too high to allow for an economic processability of meltblown nonwovens at given processability temperature window. These are presented in Figures 1A and 1B. Thus, even at changing temperatures and humidity conditions long chain polyamide materials will be better used because of only less variations of the properties.

Long chain polyamides are advantageous because of their better stability against chemicals than short chain polyamides, especially against strong acids, salt solutions, alcohols and aldehydes (Table 4). Thus, the fields of use are broader than those made of short chain polyamides.

Overall, considering the process to produce meltblown nonwovens of PA12 in an economically feasible manner, one need to come up with a technical solution which involves a higher melt flow rate, without sacrificing the advantages of common PA12 grades. Supposing, higher flow rates at given temperatures result in a) higher throughput b) lower energy consumption c) better control of fiber size d) reproducible thin fibers at low pressures which results in a denser fiber network of the meltblown nonwoven.

The Inventors have figured out that low viscosity grades of PA12 grades can be properly processed in the meltblown process and result in homogenous nonwoven fabrics with low fiber diameters and narrow fiber size distribution, resulting in a low air permeability of the produced nonwovens. These nonwovens can be interesting materials versatile applications, such as filtration (air, water, liquid, oil), textiles (clothing, outdoor, sports, common goods), packaging, membranes, bandages and medical applications. Even more applications can be considered and are being evaluated.

Additionally, to the thin fibers and small pore sizes of the nonwoven, PA12 offers a higher hydrolytic and chemical resistance compared to similar fabrics made out of PA6. Due to the lower melting point of PA12 (m.p. = 180°C), it can be processed with existing meltblown machines designed for PP.

However, the innovation itself lays within the low molecular weight, resulting in a low viscosity at given temperatures, in other words, high MFI (melt flow index).

In this work the inventors started to analyze several PA12 grades to understand the flow behavior compared to PA6 and PBT grades commercially used in meltblown process. The table 1 gives an overview of the measured melt flow indexes at 2.16 kg of different polyamides and polyesters for spun laid nonwovens.

### Brief Description of the Figures

The accompanying figures illustrate exemplary embodiments of the disclosure and serve to explain, by way of example the principles of the disclosure and are not intended to be drawn to scale or to restrict the disclosure to the embodiment illustrated in the figures.
- Figure 1a: shows the MFls of the inventive PA12s. The threshold 90 g/10 min is marked with a dashed line. It can be observed that without a low molecular weight PA12-grade, an economic meltblown process is not achieved in the given temperature range. Furthermore, a non rough skin and thin fibers would not be feasible.
- Figure 1b: shows the MFIs of the non-inventive PA12 and PA6s.

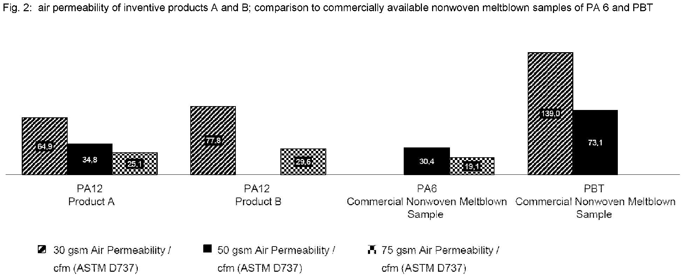

- Figure 2: shows the air permeability in [cfm/ft²] vs. the different basic weight [gsm] of the materials (table 4).

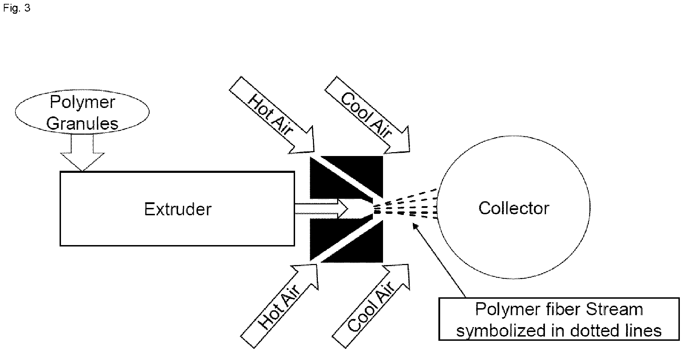

- Figure 3: shows schematically the production of the meltblown nonwoven material. The collector is rotating and the fibers "flow" preferably in a linear way.
- Figure 4a: shows the water absorption of inventive and non inventive polyamides, prepared with bars according DIN EN ISO 527-2/1BA (2012).
- Figure 4b: shows the linear swelling of the bars of figure 4a "water"
- Figure 5a: shows the tensile modulus according DIN EN ISO 527-1 (2012)
- Figure 5b: shows the stress at yield according DIN EN ISO 527-1 (2012)

### Detailed description

The polyamide meltblown nonwoven materials of the invention comprising low viscous long chain polyamides of the invention and the uses according to the invention are described hereinbelow by means of illustrative examples, without any intention that the invention be restricted to these illustrative embodiments. Where ranges, general formulas, or classes of compound are stated hereinbelow, these are intended to encompass not only the corresponding ranges or groups of compounds that are explicitly mentioned, but also all subranges and subgroups of compounds that can be obtained by taking out individual values (ranges) or compounds. Where documents are cited in the context of the present description, the entire content thereof is intended to be part of the disclosure content of the present invention. Where % values are given hereinbelow, these are values in % by weight unless otherwise stated. Percentage values for compositions are based on the total composition unless otherwise stated. Where average values are given hereinbelow, these are mass averages (weight averages) unless otherwise stated. Where measured values are given hereinbelow, these measured values were determined at a pressure of 101325 Pa and at a temperature of 25°C unless otherwise stated.

The scope of protection includes finished and packaged forms that are conventionally used in commerce for the products of the invention, not only per se but also in possible comminuted forms to the extent that these are not defined in the claims.

The optionally different units of the polyamides follow a statistical distribution. Statistical distributions are of blockwise construction with any desired number of blocks and with any desired sequence or they are subject to a randomized distribution; they may also have an alternating construction or else form a gradient over the polymer chain; in particular they can also form any mixed forms in which groups with different distributions may optionally follow one another. Specific embodiments may result in statistical distributions being restricted as a consequence of the embodiment. For all regions unaffected by the restriction, the statistical distribution is unchanged.

Within the scope of the invention long chain linear aliphatic semicrystalline polyamides will be used.

The polyamides of the compositions according to the invention can be homopolymers, co-polymers or blends of different polyamides. The differences between polyamides can be expressed, for example, due to different monomers used in polymerization, different molar mass distribution (which can be expressed in different viscosities, for example) or different end groups.

Polyamides are preferably selected from aliphatic polyamides, suitable monomers can be ω-amino acids or lactams, this leads to so-called AB polyamides (so-called perlon type), diamines and diacids, this leads to so-called AA.BB polyamides (so-called nylon type). Optionally, the monomers can be substituted, whereby the substituents must be inert in the sense of polymerization/polycondensation, preferably not Brönstedt acids or bases.

The polyamides have a statistical average of 8 to 18 carbon atoms per amide unit via the polymer, more preferably 9 to 14, and a particularly preferred 10 to 12 carbon atoms per amide unit.

In case of the formation of AA.BB polyamides so-called semi-aromatic polyamides are excluded.

Preferred monomers are selected from aliphatic lactams or ω-aminocarboxylic acids with 6 to 44 carbon atoms, preferably from 8 to 18 carbon atoms, from at least one diamine from the group of aliphatic diamines preferably with 8 to 18 carbon atoms and the cycloaliphatic diamine preferably with 6 to 22 carbon atoms in combination with at least one dicarboxylic acid from the group of aliphatic dicarboxylic acids with 6 to 44 carbon atoms and cycloaliphatic dicarboxylic acids with 8 to 24 carbon atoms.

More preferred polyamides are selected from:
PA 8, PA 9, PA 10, PA 11, PA 12, PA 13, PA 14, PA 15, PA 16, PA 17, PA 18,
PA 6.10, PA 6.12, PA 6.13, PA 6.14, PA 6.16, PA 8.10, PA 8.13, PA 9.10, PA 9.12, PA 10.10, PA 10.12,
PA 10.14, PA 10.16, PA 10.18, PA 12.12,
PA DACH.10 (Diaminocyclohexan), PA DACH.12, PA DACH.10/11,
PA PACM.6 (4,4-Diaminodicyclohexylmethan), PA PACM.10, PA PACM.12,
PA MACM.6 (3,3'-Dimethyl-4,4'-diaminocyclohexylmethan), PA MACM.10, PA MACM.12,
PA IPD.10 (Isophorondiamin), PA IPD.12,
PA IND.10 (Isononyldiamin, 1,6-Diamino-2,4,4-trimethylhexan), PA IND.12,
PA ND.10 (Nonyldiamin, 1,6-Diamino-2,2,4-trimethylhexan), PA ND.12.

Still more preferred are PA 8, PA 9, PA 10, PA 11, PA 12, PA 6.12, PA 6.14, PA 6.16, PA 10.10, PA 10.12, PA 10.14, PA 10.16, PA 10.18, PA 12.12, especially preferred PA 6.12, PA 10.10, PA 10.12, PA 8, PA 9, PA 10, PA 11 and PA 12 and particularly preferred PA 10.10, PA 10, PA 11 and PA 12.

Preferably the polyamides have melting point of lower than 225°C, further preferred lower than 220°C, more preferred lower than 210°, still more preferred lower than 200°C, especially preferred lower than 190°C and particularly preferred lower or equal than 180°C.

### Viscosity of different Polyamides

In table 1 the different MFIs (2.16 kg load; DIN EN ISO 1133) for supposed processing temperatures for PA12 are listed for comparison.

Keep in mind that below 240°C the MFI of PA12 VESTAMID^{®} L1901 NC is much too low, and for the PA6 grades Ultramid^{®} B24 and Ultramid^{®} B27E the MFI are not measurable.

For a processable (economically, reproducible, homogenous etc.) meltblown nonwoven, the MFI should be at least 90 g/10min, determined at a temperature of 60°C above the melting point. This MFI is a typical value of polymers (PP, PET) for meltblown processes at spinning temperature.

This established value is known to the ones skilled in the art. The higher the value, the more throughput can be achieved, combined with lower pressure at the die.

The PA6s (Ultramid^{®} grades, B 24 = product D and B 27 product E) show non-processable MFIs in the temperature range given in Table 1, as it's being processed at higher temperatures, this is not surprising. However, it can be regarded as "non-processable" in this temperature range, due to its low MFIs, hence, not processable on PP meltblown nonwoven equipment.

Product C is a high viscous PA12 (VN 180, ISO 307) which shows non-processable MFIs in the temperature range, which would be acceptable for PA12 - without risking coloring or degradation.

Products B is a medium viscous, low molecular weight PA12 VN 120, ISO 307) grade by Evonik Operations GmbH has MFIs of >90 g/10 min at temperatures ≤250°C. Hence, it is processable as a meltblown nonwoven and is shown in this invention.

However, product A, is a low molecular weight PA12, which has an even lower molecular weight and, thus, improved flowability (MFI>200 g/10min at 190°C - slightly above melting temperature) and has shown even more interesting characteristics for meltblown nonwoven. The improved MFIs allow for thin fibers and a homogenous material at low pressures. It should be said that too high pressures at the die result in inhomogeneous material (the diameter of the fibers is not constant), clogging, or thicker fiber diameters, therefore, less denser material.

Preferably the MFI is greater than 90 g/10min, more preferred at least 125 g/10min, still more preferred at least 150 g/10min, especially preferred at least 175 g/10min and particularly preferred at least 200 g/10min. An upper level of the MFI could be 2000 g/10min.

The inventive meltblown non woven material has an air permeability of preferably a lower level of 5 cfm/ft², more preferred 7.5 cfm/ft², 10 cfm/ft², 12.5 cfm/ft², 15 cfm/ft², 17.5 cfm/ft² and particularly preferred of 20 cfm/ft².

The inventive meltblown non woven material has an air permeability of preferably an upper level of 1000 cfm/ft², mor preferred 900 cfm/ft², 800 cfm/ft², 700 cfm/ft², 600 cfm/ft², 500 cfm/ft², 400 cfm/ft² and particularly preferred of 300 cfm/ft².

More preferably the air permeability of the inventive meltblown non woven material is of 5 to 1000 cfm/ft², especially preferred of 10 to 700 cfm/ft2 and particularly preferred of 15 to 500 cfm/ft².

The inventive meltblown non woven material has a basic weight of preferably a lower level of 0.5 gsm, more preferred 0.75 gsm, 1.0 gsm, 1.25 gsm, 1.5 gsm, 1.75 gsm, and particularly preferred of 2 gsm.

The inventive meltblown non woven material has a basic weight of preferably an upper level of 300 gsm, more preferred 200 gsm, 100 gsm, 90 gsm, 80 gsm,70 gsm and particularly preferred of 60 gsm.

The meltblown non woven material has preferably a basic weight of 0.5 to 300 gsm, more preferred 1.5 to 80 gsm, particularly preferred 2 to 60 gsm.

The preferred melt blown nonwoven material is made of long chain linear aliphatic semicrystalline polyamide having
i. 8 to18, preferred 9 to 14, preferred 10 to 12 carbon atoms per amid group,
ii. a melt flow index of at least 90 g/10 min, determined by DIN EN ISO 1133,
iii. where the polyamide optionally comprises additives;

where the diameter of the polyamid fibers is 0.1 to 15 µm, preferred 0.3 to 10 µm, more preferred 0.4 to-10 µm, particularly preferred 1 to 5 µm;
and where the air permeability is of 5 to 1000 cfm/ft², especially of 10 to 700 cfm/ft² and particularly preferred of 15 to 500 cfm/ft².

A further preferred melt blown nonwoven material is made of long chain linear aliphatic semicrystalline polyamide having
i. 8 to18, preferred 9 to 14, preferred 10 to 12 carbon atoms per amid group,
ii. a melt flow index of at least 90 g/10 min, determined by DIN EN ISO 1133, preferably the MFI is greater than 100 g/10min, more preferred at least 125 g/10 min, still mor preferred at least 150 g/10 min, especially preferred at least 175 g/10 min and particularly preferred at least 200 g/10 min;
iii. where the polyamide optionally comprises additives;
where the water absorption of the polyamide is lower than 2.0 % by weight, preferred lower than 1.8, more preferred lower than 1.6.

A further preferred melt blown nonwoven material is made of long chain linear aliphatic semicrystalline polyamide having
i. 8 to18, preferred 9 to 14, preferred 10 to 12 carbon atoms per amid group,
ii. a melt flow index of at least 90 g/10 min, determined by DIN EN ISO 1133, preferably the MFI is greater than 100 g/10min, more preferred at least 125 g/10 min, still mor preferred at least 150 g/10 min, especially preferred at least 175 g/10 min and particularly preferred at least 200 g/10 min;
iii. where the polyamide optionally comprises additives;
where the water absorption of the polyamide is lower than 6 % by weight, preferred lower than 4, more preferred lower than 3.

A particularly preferred melt blown nonwoven material is made of long chain linear aliphatic semicrystalline polyamide having
i. 8 to18, preferred 9 to 14, preferred 10 to 12 carbon atoms per amid group,
ii. a melt flow index of at least 90 g/10 min, determined by DIN EN ISO 1133, preferably the MFI is greater than 100 g/10min, more preferred at least 125 g/10 min, still more preferred at least 150 g/10 min, especially preferred at least 175 g/10 min and particularly preferred at least 200 g/10 min;
iii. where the polyamide optionally comprises additives;
where the product of air permeability and basic weight is of 1000 to 5000 (cfm/ft²) per gsm, preferred of 1100 to 5000, especially preferred of 1300 to 4000 and particularly preferred of 1500 to 3000 (cfm/ft²) per gsm.

The meltblown nonwoven material polyamides are free from low boiling compounds, in particular free of compounds with a boiling point below 300°C, preferred below 280°C and particularly preferred below 260°C. This is even valid within the process of production of the meltblown nonwoven material.

The reduction of the molecular weight of the long chain polyamides in the scope of the invention is performed by syntheses of the polyamides before the meltblown process.

Excluded are processes which are based on degradation reactions, as being thermal degradation or degradation based on hydrolysis with water or other protic solvents at elevated temperatures. Also excluded are the uses of organic solvents for example toluene, benzene, xylene, decalin, and acids for example sulfuric acid, formic acid, adipic acid within the meltblown process.

The water content of the polyamide before and in the meltblown process is at most of 0.5 % by weight, preferred at most 0.4 % by weight, more preferred at most 0.3 % by weight, especially preferred at most 0.2 % by weight % and particularly preferred at most 0.1 % by weight-

The advantages of using dry polyamides are a high homogeneity of the fibers, having a constant diameter.

The diameter of the polyamide fibers is 0.1 to15 µm, preferred 0.3 to 10 µm, more preferred 0.4 to-10 µm, particularly preferred 1 to 5µm.

The temperature of the meltblown process of the polyamides is preferably at most 250°C, more preferred at most 240°C, still more preferred at most 230°C, especially preferred at most 220°C, more especially preferred at most 210°C and particularly preferred at most 200°C.

The advantage of these low temperatures is that the polyamides are prevented against degradation and discolouring.

**Table 1: Measured MFIs at different processing temperatures (2.16 kg load; DIN EN ISO 1133-1 (2012)).**

| **Product** | **Polymer** | **MFI 2,16kg [g/10min] *(DIN EN ISO 1133)*** | | | | | | |
|---|---|---|---|---|---|---|---|---|
| | | **190°C** | **200°C** | **210°C** | **220°C** | **240°C** | **250°C** | **260°C** |
| A | PA12 | 211 | 296 | 421 | 550 | 912 | | |
| B | PA12 | 23 | 32 | 44 | 59 | 93 | 116 | 141 |
| C | PA12 | | | | | 12 | 15 | 19 |
| D | PA6 | | | | | 48 | 55 | 70 |
| E | PA6 | | | | | 25 | 31 | 37 |

| | | | | | | | | |
|---|---|---|---|---|---|---|---|---|
| Products A and B are inventive examples. Products C (VESTAMID L1901, Evonik), D (Ultramid B24, BASF) and E (Ultramid B27E, BASF) are not inventive examples. | | | | | | | | |

Products A and B were successfully used to produce meltblown nonwoven materials. All meltblown nonwovens of these materials produced showed smooth surfaces and thin fibers were observed. Lower molecular weights and respective higher MFIs (product A vs. product B) resulted in thinner fibers. However, both materials show promising material properties, and each could be fit to one specific application. One difference is the process temperature which was for the product B 45°C higher than the product A (200°C). Therefore, product A would be a more suitable candidate for existing PP meltblown equipment.

The spinning trials proved that product B results in smaller fiber diameters and lower air permeabilities (table 6, for the same basic weight). Especially at low throughput and high air pressure fiber diameter in the range of 1.7 to 2.6 micrometers can be achieved. Product A with lower molecular weight than product B was successfully used to obtain thin fibers and gain low pore sizes which is reflected by the lower air permeability of the product A compared to product B for the same basic weight. However, the fibers were too thin to be measured in a robust manner. Hence, the air permeability is used for comparison purposes. Product A showed in the meltblown process an increased flow rate at lower temperatures, caused by the higher MFI, respectively caused by the lower molecular weight.

For comparison purpose, commercially available PBT and PA6 meltblown nonwoven samples were purchased and analyzed to benchmark the novel PA12 melblown nonwovens.

Furthermore, it should be highlighted that PA12 shows lower water uptake (table 2), and higher hydrolytic stability, compared to PA6. This is promising for e.g. filtration, or textiles in humid areas, as the air permeability reflects the pore size, as well. The water absorption and hydrolytic resistance in water is a crucial point for evaluating the usability of the product in the desired application.

For benchmarking products A, B, D and E were put in water at 70°C for 7 days, as injection molded parts, prepared according DIN EN 527-2 Type 1BA. The water uptake was measured via weighing after drying the surface with a soft paper sheet and waiting for 1 minute.

**Table 2: Water Uptake PA12 vs. PA6**

| **Product** | A | B | D | E |
|---|---|---|---|---|
| **Water uptake** | 1,5 % | 1.2 % | 9.2 % | 8,6 % |

Further tests with commercial materials have been performed:
The water absorption and linear swellings are measured with test specimen according to DIN 527-2/2BA
- dry: as moulded, 23°C
- moisture: water moisture of 50% r.h. (relative humidity), 23°C, * (PA 6.12) 63% r.h. at 70°C, storing for 1 month under these conditions
- saturated: after placing in water of 23°C for 1 week.

**Table 3: water absorption, linear swelling and mechanical data (stress at yield, tensile modulus; DIN 527-1, speed 5 mm/min) of PA 6, PA 6.6, PA 6.12, PA 11 and PA 12.**

| | | PA 6 | PA 6.6 | PA 6.12 | PA 11 | PA 12 |
|---|---|---|---|---|---|---|
| **water absorption** [%] | saturated | 9,3 | 8,5 | 2,4 | 2 | 1,5 |
| | moisture | 3 | 2,5 | 0,3* | 1,2 | 0,7 |
| **linear swelling** [%] | saturated | 3,2 | 3 | 0,6 | 0,7 | 0,6 |
| **stress at yield** [MPa] | dry | 85 | 85 | 58 | | 43 |
| | saturated | 40 | 50 | 53 | | 38 |
| relative deacrease of stress at yield | (saturated -dry)/ saturated | -1.13 | -0.70 | -0.09 | | -0.13 |
| **tensile modulus** [MPa] | dry | 3100 | 3000 | 2200 | | 1400 |
| | saturated | 1000 | 1100 | 1700 | | 1000 |
| relative deacrease of tensile modulus | (saturated -dry)/ saturated | -2.10 | -1.73 | -0.29 | | -0.40 |

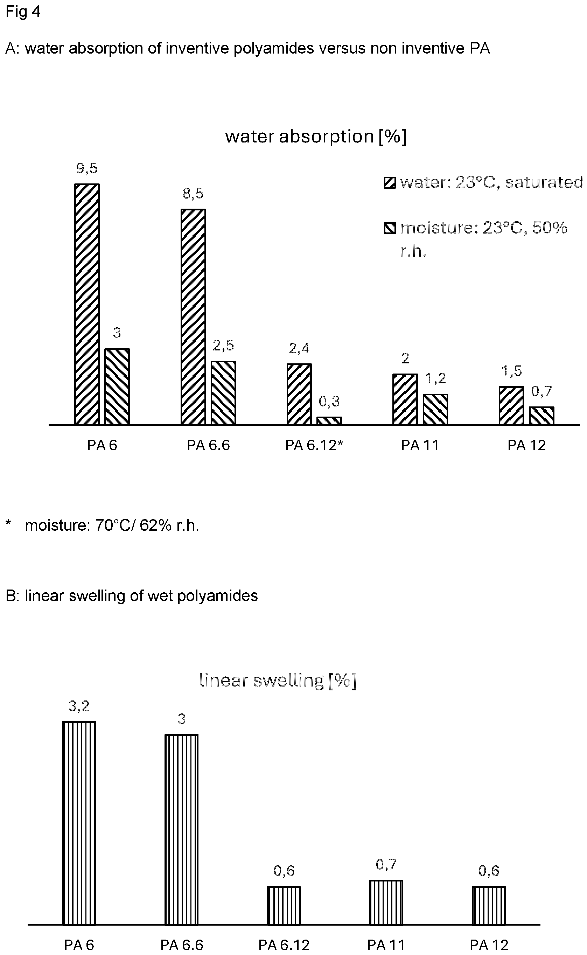

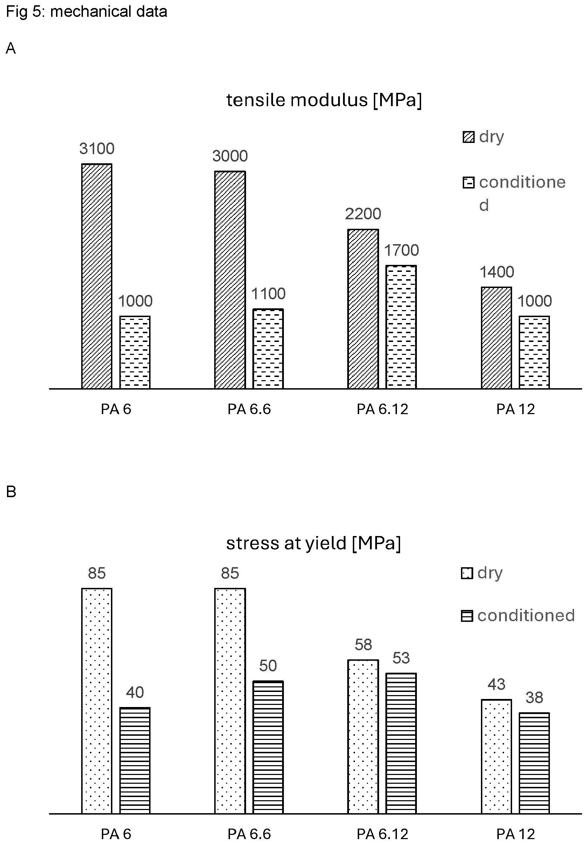

The data of table 3 are presented in figures 4 and 5.

The advantage of the long chain polyamides is best presented as the relative decreases of the mechanical data which are calculated by the absolute difference values of dry and water saturated samples divided by the value of the saturated sample.

Thus, the mechanical stability of the inventive long chain polyamide based meltblown nonwoven materials show only very little dependence of the climate values on earth and can be used even under water with predictable high mechanical stability.

A further advantage of the long chain polyamides is their greater stability against chemicals as presented in the following table.

**Table 4: resistance of polyamides against chemicals; O low, ⊗ ⊗ medium, ● ● ● high**

| **Chemical** | **PA 6** | **PA 6.6** | **PA 12** |
|---|---|---|---|
| strong acids * | ○ | ○ | ⊗ ⊗ |
| strong alkalines * | ● ● ● | ● ● ● | ● ● ● |
| salt solutions * | ⊗ ⊗ | ⊗ ⊗ | ● ● ● |
| aromatics | ● ● ● | ● ● ● | ● ● ● |
| alkohols | ⊗ ⊗ | ⊗ ⊗ | ● ● ● |
| ketons | ● ● ● | ● ● ● | ● ● ● |
| aldehyde | ⊗ ⊗ | ⊗ ⊗ | ● ● ● |
| gasoline | ● ● ● | ● ● ● | ● ● ● |

| | | | |
|---|---|---|---|
| * depending on the concentration | | | |

A preferred process for the production of melt blown nonwoven material, using a of long chain linear aliphatic semicrystalline polyamide having
i. 8 to18, preferred 9 to 14, preferred 10 to 12 carbon atoms per amid group,
ii. a melt flow index of at least 90 g/10 min, determined by DIN EN ISO 1133-1 (2012),
iii. where the polyamide optionally comprises additives;

wherein the polyamide has been dried to a water content of at most of 0.5 % by weight, preferred at most 0.4 % by weight, more preferred at most 0.3 % by weight, especially preferred at most 0.2 % by weight % and particularly preferred at most 0.1 % by weight,
where the molten polyamide has a temperature of at most of 250°C, preferred at most 240°C, more preferred at most 230°C, still more preferred at most 220°C, especially preferred at most 210°C and particularly preferred at most 200°C.

Optionally, the polyamide moulding compounds of the invention comprise, besides the described components, further additives selected from one or more representatives, optionally two or more of the same kind, such as stabilizers, other polymers (preferably excluded are polypropylene and polyethylene), impact modifiers, plasticizers, colouring agents such as pigments and dyes, processing aids.

Suitable **oxidation stabilizers** (anti-oxidant) are aromatic amines, sterically hindered phenols, hydroquinones, phosphites, phosphonites, thiosynergists, hydroxylamines, benzofuranone derivatives, acryloyl-modified phenols etc. A great many types of such oxidation stabilizers are commercially available, for example under the trade names Naugard 445, Irganox 1010, Irganox 1098, Irgafos 168, P-EPQ or Lowinox DSTDP. In general, the moulding compounds comprise about 0.01% to about 2% by weight and preferably about 0.1% to about 1.5% by weight of oxidation stabilizers.

In addition, the moulding compounds may also comprise UV stabilizers or light stabilizers. Suitable **UV stabilizers** are organic UV absorbers, for example benzophenone derivatives, benzotriazole derivatives, resorcinols, salicylates, oxalanilides and phenyltriazines. Light stabilizers of the HALS type are tetramethylpiperidine derivatives. UV stabilizers and light stabilizers may advantageously be used in combination. A great many types of both are commercially available; the manufacturer's instructions can be followed in respect of the dosage.

In addition, the moulding compounds may comprise hydrolysis stabilizers, for instance a monomeric, oligomeric or polymeric carbodiimide or bisoxazoline.

**Impact modifiers** are known to those skilled in the art. They contain functional groups which originate from unsaturated functional compounds that are either incorporated into the main chain polymer or grafted onto the main chain. The most commonly used are EPM or EPDM rubber that has undergone free-radical grafting with maleic anhydride. Rubbers of this kind can also be used together with an unfunctionalized polyolefin, for example isotactic polypropylene, as described in EP-A-0 683 210.

**Plasticizers** are known to those skilled in the art from Gächter/Müller, Kunststoffadditive [Plastics additives], C. Hanser Verlag, 2nd edition, p. 296. Examples of customary compounds suitable for use as plasticizers are esters of p-hydroxybenzoic acid having 2 to 20 carbon atoms in the alcohol component or amides of arylsulfonic acids having 2 to 12 carbon atoms in the amine component, preferably amides of benzenesulfonic acid. Useful plasticizers include ethyl p-hydroxybenzoate, octyl p-hydroxybenzoate, i-hexadecyl p-hydroxybenzoate, N-n-octyltoluenesulfonamide, N-n-butylbenzenesulfonamide or N-2-ethylhexylbenzenesulfonamide.

Examples of suitable **pigments** and/or **dyes** are mixed oxides, titanium dioxide, iron oxide, zinc sulfide, ultramarine, nigrosin, organic pigments, such as phthalocyanines, quinacridones, perylene, nigrosin, anthraquinones, pearlescent pigments.

Examples of suitable **processing aids** are paraffins, fatty alcohols, fatty acid amides, stearates such as calcium stearate, paraffin waxes, montanates or polysiloxanes.

Preferably the content of additives is 0.1 to 5 % by weight, more preferred 0.2 to 4 % by weight, particularly preferred 0.3 to 3 % by weight based on the sum of polyamide plus additives.

### PRACTICAL EXAMPLES:

In the following section all process data and measured data of the meltblown nonwovens will be provided as practical examples in tables. The polymers were spun at 245°C and 200°C, respectively, on a 38 cm (15 in) Biax Meltblown Research Line. All further data is provided in the upcoming tables.
- Table 5 shows the processing parameters. The throughput is measured via the speed of the melt pump in rpm. The aimed basic weight describes the desired value with these process parameters. DCD represents the die-collector-distance, see introduction.
- Table 6 shows the resulting meltblown nonwoven properties of the produced materials. All nonwoven samples were analyzed regarding fiber diameter, air permeability, resulting basic weight and tensile and tear properties. Air permeability was measured according to ASTM D737-18. Basis Weight was measured according to ASTM D3776-20. The fiber diameters were determined from SEM images.
- Table 7 shows the results of the strip tensile measurements (ASTM D5035-11; specific test for fabrics; measured at 71.6 F, speed of 300 mm/min, humidity product A 57% r.h, product B 43% r.h.). For fabrics, one differentiates the direction of the fabric. Machine direction (MD) refers to the production direction of the conveyor belt, whereas cross direction (CD) indicates the other direction.
- Table 8 shows the results of the tongue tear measurements (ASTM D2261-13; specific test for fabrics, temperature and humidity conditions are as in table 7).

The results presented in tables 5, 6, 7 and 8 present arithmetic middle of 18 samples, each measured 5 times.

**Table 5: Processing parameters of PA12 Meltblown Nonwovens produced.**

| **product** | **example** | **aimed basic weight [gsm]** | **air pressure [psi]** | **through-put [rpm]** | **DCD [mm]** | **processing temperature [°C]** |
|---|---|---|---|---|---|---|
| B | 1 | 75 | 14 | 8 | 200 | 245 |
| | 2 | 30 | 8 | 10 | 200 | 245 |
| | 3 | 30 | 14 | 10 | 200 | 245 |
| | 4 | 30 | 14 | 10 | 250 | 245 |
| | 5 | 20 | 14 | 10 | 200 | 245 |
| | 3 | 10 | 14 | 10 | 200 | 245 |
| | 7 | 5 | 14 | 10 | 200 | 245 |
| A | 8 | 30 | 14 | 12 | 200 | 200 |
| | 9 | 30 | 14 | 12 | 200 | 200 |
| | 10 | 20 | 14 | 12 | 200 | 200 |
| | 11 | 10 | 14 | 12 | 200 | 200 |
| | 12 | 5 | 14 | 12 | 200 | 200 |
| | 13 | 50 | 14 | 12 | 200 | 200 |
| | 14 | 75 | 14 | 12 | 200 | 200 |

**Table 6: Results of PA12 Meltblown Nonwovens produced.**

| **product** | **example** | **fiber diameter, [µm]** | **air permeability, [cfm/ft²]** | **basic weight, [gsm]** |
|---|---|---|---|---|
| B | 1 | 1.7 | 29.6 | 75.4 |
| | 2 | 2.1 | 126.4 | 27.6 |
| | 3 | 1.8 | 77.8 | 29.0 |
| | 4 | 2.0 | 85.4 | 28.0 |
| | 5 | 2.6 | 123.0 | 18.0 |
| | 3 | 1.8 | 277.2 | 6.2 |
| | 7 | 3.9 | 382.0 | 2.0 |
| A | 8 | < 1 | 34.9 | 26.8 |
| | 9 | < 1 | 60.68 | 24.8 |
| | 10 | < 1 | 102.5 | 18.2 |
| | 11 | < 1 | 241.8 | 10.6 |
| | 12 | < 1 | 555.6 | 2.8 |
| | 13 | < 1 | 34.8 | 47.8 |
| | 14 | < 1 | 25.12 | 68.8 |

**Table 7: Results of PA12 Meltblown Nonwoven materials tested via mechanical strip tensile measurements (ASTM D5035-11).**

| | | **MD** | | **CD** | |
|---|---|---|---|---|---|
| **product** | **example** | **peak load [Ibf]** | **strain @ break [%]** | **peak load [Ibf]** | **strain @ break [%]** |
| B | 1 | 5.5 | 16.8 | 5.2 | 123.0 |
| | 2 | 2.7 | 43.0 | 1.5 | 124.3 |
| | 3 | 2.7 | 26.9 | 1.7 | 132.8 |
| | 4 | 1.7 | 16.5 | 1.7 | 148.8 |
| | 5 | 2.0 | 41.5 | 1.1 | 137.1 |
| | 6 | 0.9 | 58.3 | i 0.4 | 119.7 |
| | 7 | i 0.4 | 56.6 | i 0.3 | 168.6 |
| A | 8 | 1.3 | 14.0 | i 0.7 | 96.8 |
| | 9 | 1.2 | 10.0 | i 0.8 | 103.5 |
| | 10 | i 0.8 | 13.3 | i 0.5 | 99.5 |
| | 11 | i 0.4 | 17.5 | i 0.2 | 106.2 |
| | 12 | i 0.2 | 21.5 | 0.1 | 95.5 |
| | 13 | 2.0 | 15.6 | 1.5 | 101.4 |
| | 14 | 2.6 | 19.3 | 2.5 | 102.6 |

**Table 8: Results of PA12 Meltblown Nonwoven materials tested via mechanical tongue tear measurements (ASTM D2261-13).**

| | | **MD** | | **CD** | |
|---|---|---|---|---|---|
| **product** | **example** | **peak load [Ibf]** | **strain @ break [%]** | **peak load [Ibf]** | **strain @ break [%]** |
| B | 1 | 3.0 | 176.7 | 1.6 | 115.6 |
| | 2 | 1.1 | 143.1 | 1.0 | 293.7 |
| | 3 | 1.2 | 152.4 | i 0.9 | 254.8 |
| | 4 | 1.2 | 108.4 | i 0.9 | 100.9 |
| | 5 | i 0.7 | 166.3 | i 0.7 | 357.9 |
| | 6 | 1 0.4 | 213.5 | i 0.4 | 340.1 |
| | 7 | i 0.2 | 260.0 | 0.3 | 391.1 |
| A | 8 | i 0.7 | 126.1 | i 0.3 | 215.6 |
| | 9 | i 0.7 | 156.0 | i 0.3 | 217.9 |
| | 10 | i 0.4 | 120.6 | i 0.2 | 145.6 |
| | 11 | i 0.3 | 158.0 | i 0.2 | 195.3 |
| | 12 | i 0.1 | 157.6 | i 0.1 | 218.9 |
| | 13 | 1.1 | 108.4 | i 0.5 | 284.7 |
| | 14 | 1.6 | 111.6 | i 0.7 | 204.3 |

### Abbreviations, terms, acronyms and reference signs as used herein include:

- PA: polyamide
- PP: polypropylene
- MFI: melt flow index
- VN: viscosity number
- r.h.: relative humidity
- psi: pounds per square inch
- gsm: gram per square meter
- MD: main direction
- CD: cross direction
- Ibf: pound-force
- µm: micro meter
- cfm/ft²: cubic feet per minute / square feet
- DCD: Die-to-Collector-Distance

## Claims

1. Long chain linear aliphatic semicrystalline Polyamide having
i. 8 to18 carbon atoms per amid group,
ii. a melt flow index of at least 90 g/10 min, determined by DIN EN ISO 1133 with a load of 2.16 kg at a temperature 60°C above the melting point,
iii. where the polyamide optionally comprise additives.
for use to produce melt blown non woven material.

2. Melt blown non woven material made of fibers out of long chain linear aliphatic semicrystalline polyamide having
i. 8 to18 carbon atoms per amid group,
ii. a melt flow index of at least 90 g/10 min, determined by DIN EN ISO 1133 with a load of 2.16 kg at a temperature 60°C above the melting point,
iii. where the polyamide optionally comprise additives.

3. The material according claim 1, where the polyamide has 9 to 14 carbon atoms per amid group,

4. The material according claim 1 or 2, where the polyamide is selected from the group of PA 6.12, PA 10.10, PA 10.12, PA 8, PA 9, PA 10, PA 11 and PA 12.

5. The material according at least one of claims 1 to 3 where the polyamide comprises 0.1 - 5 %, preferred 0.2 to 4 %, more preferred 0.3 to 3 % by weight of additives, based on the sum of polyamide plus additives.

6. The material according at least one of claims 1 to 4 where the diameter of the polyamid fibers is 0.1 to 15 µm, preferred 0.3 to 10 µm, more preferred 0.4 to-10, particularly preferred 1 to 5.

7. The material according at least one of claims 1 to 5 where the air permeability is 5 to 1000 cfm/ft², preferred of 10 to 700 cfm/ft2 and particularly preferred of 15 to 500 cfm/ft².

8. The material according at least one of claims 1 to 6 where the basic weight is 0.5 to 100 gsm, preferred 1.5 to 80 gsm, particularly preferred 2 to 60 gsm.

9. Process for the production of meltblown non woven material according at least one of claims 1 to 7, wherein the polyamide has been dried to a water content of at most of 0.5 % by weight, preferred at most 0.4 % by weight, more preferred at most 0.3 % by weight, especially preferred at most 0.2 % by weight % and particularly preferred at most 0.1 % by weight.

10. Process for the production according claim 8, where 0.2 - 3 % by weight additives have been added to the polyamide.

11. Process for the production according at least one of claims 8 or 9, where the molten polyamide has a temperature of at most of 250 °C, preferred at most 240°C, more preferred at most 230°C, still more preferred at most 220°C, especially preferred at most 210°C and particularly preferred at most 200°C.

12. Use of the material of claims 1 to 7 or the process product of claims 8 to 11 for for liquid filters, air filters, apparel, textiles, packaging, membranes, medical kits, bandages, or other medical applications.
